# EUROPÄISCHE PATENTANMELDUNG

(11) **EP 4 821 709 A1**
(43) Veröffentlichungstag der Anmeldung: **14.10.2026**
(21) Anmeldenummer: 25169794.2
(22) Anmeldetag: 10.04.2025
(51) Int. Cl.: B60C 23/00, B60B 35/12

(54) **ACHSBAUGRUPPE MIT EINER DREHDURCHFÜHRUNG FÜR EINE REIFENDRUCKREGELANLAGE**

(71) Anmelder: Deere & Company, Moline, IL 61265 (US)
(72) Erfinder: STEINER, TOBIAS, 68163 Mannheim (DE); BUSE, JONAS, 68163 Mannheim (DE); HAUSER, STEFAN, 68163 Mannheim (DE)
(74) Vertreter: Dehnhardt, Florian Christopher

(57) **Zusammenfassung**

Die Erfindung betrifft eine Achsbaugruppe (10) mit einer Drehdurchführung (66) für eine Reifendruckregelanlage, insbesondere für einen landwirtschaftlichen Traktor, umfassend ein als Achstrichter (12) ausgebildetes Endantriebsgehäuse (14) mit einem Planetengetriebe (22), das eine von einem Hinterachsdifferential antreibbare Endantriebswelle (26) mit einem Sonnenrad (28), ein gegenüber dem Endantriebsgehäuse (14) feststehendes Hohlrad (30) sowie mehrere an einem Planetenradträger (32) drehbar gelagerte Planetenräder (34) aufweist, die sowohl mit dem Sonnenrad (28) wie auch dem Hohlrad (30) in Eingriff stehen, wobei der Planetenradträger (32) im Bereich eines daran ausgebildeten Axialflanschs (36) mit einer innerhalb des Endantriebsgehäuses (14) drehbar gelagerten Achswelle (38) antriebsverbunden ist, wozu ein Endabschnitt (40) der Achswelle (38) innerhalb einer durch den Axialflansch (36) umgrenzten Montageöffnung (42) drehfest aufgenommen ist. Innerhalb des Axialflanschs (36) ist ein Verbindungskanal (62) zur Herstellung einer Druckluftverbindung zwischen einer an einem Außenumfang des Axialflanschs (36) verlaufenden Drehdurchführung (66) zur Druckluftzufuhr und einer am Endabschnitt (40) der Achswelle (38) vorgesehenen Lufteintrittsöffnung (68) ausgebildet, die insbesondere in einen innerhalb der Achswelle (38) verlaufenden Versorgungskanal (72) zum Anschluss an ein mit einem Reifeninnenraum eines zugehörigen Hinterrads kommunizierendes Reifendruckregelventil mündet.

## Beschreibung

Die Erfindung betrifft eine Achsbaugruppe mit einer Drehdurchführung für eine Reifendruckregelanlage, insbesondere für einen landwirtschaftlichen Traktor. Die Achsbaugruppe umfasst ein als Achstrichter ausgebildetes Endantriebsgehäuse mit einem Planetengetriebe, das eine von einem Hinterachsdifferential antreibbare Endantriebswelle mit einem Sonnenrad, ein gegenüber dem Endantriebsgehäuse feststehendes Hohlrad sowie mehrere an einem Planetenradträger drehbar gelagerte Planetenräder aufweist, die sowohl mit dem Sonnenrad wie auch dem Hohlrad in Eingriff stehen. Der Planetenradträger ist im Bereich eines daran ausgebildeten Axialflanschs mit einer innerhalb des Endantriebsgehäuses drehbar gelagerten Achswelle antriebsverbunden. Hierzu ist ein Endabschnitt der Achswelle innerhalb einer durch den Axialflansch umgrenzten Montageöffnung drehfest aufgenommen.

Die Verwendung von Reifendruckregelanlagen ist insbesondere im Bereich landwirtschaftlicher Traktoren verbreitet. Diese erlauben es, beim Befahren eines Felds eine den jeweiligen Bodenbedingungen entsprechende Anpassung der Reifenaufstandsflächen vornehmen zu können. Die Anpassung der Reifenaufstandsflächen erfolgt üblicherweise derart, dass durch entsprechende Reduzierung des Reifenfülldrucks und Vergrößerung des Reifenlatschs eine übermäßige Verdichtung der Feldoberfläche verringert wird.

Neben vergleichsweise einfachen Nachrüstlösungen zur Reifendruckregelung mit außenliegenden Druckluftleitungen, die von einem Druckluftkompressor zu einer an einer Radnabe angebrachten Drehdurchführung und von dort zu einem Reifendruckregelventil führen, sind insbesondere auch baulich integrierte Anordnungen im Bereich einer Hinterachse, die Bestandteil einer Achsbaugruppe einer Endantriebseinheit des landwirtschaftlichen Traktors sind, üblich. In letzterem Fall schränkt der Bauraumbedarf der Drehdurchführung jedoch nicht nur die freie Platzierbarkeit zugehöriger Lagerstellen entlang der Hinterachse ein, auch wirkt sich eine bauliche Integration der Druckluftleitungen auf die strukturelle Belastbarkeit der von diesen durchsetzten Achskomponenten aus.

Angesichts dessen ist es Aufgabe der vorliegenden Erfindung, eine hinsichtlich der baulichen Integration der Drehdurchführung verbesserte Achsbaugruppe der eingangs genannten Art anzugeben.

Diese Aufgabe wird durch eine Achsbaugruppe mit einer Drehdurchführung für eine Reifendruckregelanlage mit den Merkmalen des Patentanspruchs 1 gelöst.

Die erfindungsgemäße Achsbaugruppe mit einer Drehdurchführung für eine Reifendruckregelanlage, insbesondere für einen landwirtschaftlichen Traktor, umfasst ein als Achstrichter ausgebildetes Endantriebsgehäuse mit einem Planetengetriebe, das eine von einem Hinterachsdifferential antreibbare Endantriebswelle mit einem Sonnenrad, ein gegenüber dem Endantriebsgehäuse feststehendes Hohlrad sowie mehrere an einem Planetenradträger drehbar gelagerte Planetenräder aufweist, die sowohl mit dem Sonnenrad wie auch dem Hohlrad in Eingriff stehen, wobei der Planetenradträger im Bereich eines daran ausgebildeten Axialflanschs mit einer innerhalb des Endantriebsgehäuses drehbar gelagerten Achswelle antriebsverbunden ist, wozu ein Endabschnitt der Achswelle innerhalb einer durch den Axialflansch umgrenzten Montageöffnung drehfest aufgenommen ist.

Die so gebildete Endantriebseinheit dient der Erhöhung des Drehmoments der Achswelle bzw. der durch diese gebildeten Hinterachse des landwirtschaftlichen Traktors gegenüber der Endantriebswelle, abhängig von einem jeweils gewählten Untersetzungsverhältnis des Planetengetriebes. Die Endantriebswelle steht hierbei über eine Außenverzahnung mit einer komplementären Innenverzahnung einer Getriebeausgangswelle eines Hinterachsdifferentials des landwirtschaftlichen Traktors in Antriebsverbindung.

Erfindungsgemäß ist nun vorgesehen, dass innerhalb des Axialflanschs ein Verbindungskanal zur Herstellung einer Druckluftverbindung zwischen einer an einem Außenumfang des Axialflanschs verlaufenden Drehdurchführung zur Druckluftzufuhr und einer am Endabschnitt der Achswelle vorgesehenen Lufteintrittsöffnung ausgebildet ist. Die Lufteintrittsöffnung mündet insbesondere in einen innerhalb der Achswelle verlaufenden Versorgungskanal zum Anschluss an ein mit einem Reifeninnenraum eines zugehörigen Hinterrads kommunizierendes Reifendruckregelventil.

Da die Drehdurchführung dem Axialflansch zugeordnet ist und daher keinen zusätzlichen Bauraum entlang der Achswelle in Anspruch nimmt, schränkt deren Vorhandensein die freie Platzierbarkeit der Lagerstellen entlang der Hinterachse nicht ein. Auch ist die Lufteintrittsöffnung am Endabschnitt und damit in einem hinsichtlich Torsion und Biegung vergleichsweise gering beanspruchten Bereich der Achswelle eingebracht. Die Lufteintrittsöffnung wie auch der sich daran anschließende Versorgungskanal bleiben daher weitgehend ohne Auswirkungen auf die strukturelle Belastbarkeit der Achswelle.

Auf der Verwendung eines Planetengetriebes beruhende Endantriebseinheiten sind bei den meisten landwirtschaftlichen Traktoren gängig, was eine bauliche Integration der erfindungsgemäßen Achsbaugruppe für den Fall eines mit einer Reifendruckregelanlage auszustattenden landwirtschaftlichen Traktors maßgeblich vereinfacht.

Vorteilhafte Weiterbildungen der erfindungsgemäßen Achsbaugruppe gehen aus den Unteransprüchen hervor.

Vorzugsweise ist der Verbindungskanal als innerhalb des Axialflanschs radial und/oder axial verlaufende Bohrung ausgebildet. Die Bohrung wird insbesondere im Rahmen einer Nachbearbeitung des als Gussteil hergestellten Planetenradträgers eingebracht. Je nach Lage der Lufteintrittsöffnung gegenüber der Drehdurchführung kann es sich entweder um eine radial verlaufende Durchgangsbohrung oder aber um eine zunächst in Richtung des Endabschnitts axial verlaufende Sackbohrung handeln. Letztere trägt dem Umstand Rechnung, die Lufteintrittsöffnung soweit wie möglich in den Bereich des hinsichtlich Torsion und Biegung am wenigsten beanspruchten Achswellenendes zu verlagern.

Ferner besteht die Möglichkeit, dass eine Außenverzahnung am Endabschnitt der Achswelle durch Eingreifen in eine Innenverzahnung in der Montageöffnung des Axialflanschs eine drehfeste Steckverzahnung ausbildet. Gerade im Wartungsfall erlaubt diese eine problemlose Demontage der Achswelle durch einfaches Herausziehen des außenverzahnten Endabschnitts aus der innenverzahnten Montageöffnung.

Hierbei kann vorgesehen sein, dass der Verbindungskanal in einen mit der Lufteintrittsöffnung kommunizierenden Ringkanal mündet, wobei der Ringkanal entlang eines Außenumfangs des Endabschnitts der Achswelle und/oder eines Innenumfangs der Montageöffnung im Axialflansch eingebracht ist. Der umlaufende Ringkanal stellt sicher, dass unabhängig von der Winkelposition, in der die drehfeste Steckverzahnung beim Einbau der Achswelle hergestellt wird, stets eine durchgehende Druckluftverbindung zwischen Verbindungskanal und Lufteintrittsöffnung besteht. Dies vereinfacht die Montage der Achswelle beim Zusammenbau der Endantriebseinheit wesentlich.

Um eine Beanspruchung der Achswelle aufgrund betriebsbedingt über das Hinterrad einwirkender Biegebelastungen zu minimieren, ist es von Vorteil, wenn diese innerhalb des Endantriebsgehäuses im Bereich voneinander abgewandter Achsabschnitte mittels zugehöriger Lagerstellen drehbar abgestützt ist.

So kann einerseits eine erste bzw. innenliegende Lagerstelle vorgesehen sein, bei der ein die Achswelle gegenüber dem Endantriebsgehäuse abstützendes Wälzlager stirnseitig unmittelbar am Axialflansch anliegt oder mit diesem über einen zwischenliegenden Toleranzausgleichsring in Kontakt steht. Bei dem Wälzlager handelt es sich beispielsweise um ein Kegelrollenlager.

Dabei ist es denkbar, dass am Endabschnitt der Achswelle eine Andruckplatte zum Verspannen des Planetenradträgers bzw. des daran ausgebildeten Axialflanschs gegenüber dem Wälzlager vorgesehen ist, wobei eine in der Andruckplatte ausgebildete Kanalverlängerung eine Druckluftverbindung zwischen dem Verbindungskanal und der in diesem Fall an der Stirnseite des Endabschnitts der Achswelle mittenzentriert eingebrachten Lufteintrittsöffnung herstellt. Bevorzugt durchsetzt der sich daran anschließende Versorgungskanal die Achswelle zentral entlang ihrer Rotationsachse, wodurch sich mögliche Auswirkungen auf die strukturelle Belastbarkeit der Achswelle weiter reduzieren lassen.

Andererseits kann eine zweite bzw. außenliegende Lagerstelle vorgesehen sein, bei der ein weiteres Wälzlager die Achswelle im Bereich eines äußeren Achstrichterendes gegenüber dem Endantriebsgehäuse abstützt. Auch das weitere Wälzlager kann als Kegelrollenlager ausgebildet sein.

Die Drehdurchführung kommuniziert mit einem im Endantriebsgehäuse ausgebildeten Luftzufuhrkanal zum Anschluss an eine Reifendruckregelanlage. Bezüglich der Drehdurchführung kommen verschiedene, auf der Verwendung von Radiallippendichtungen oder dergleichen beruhende gängige Anordnungen in Frage.

Die erfindungsgemäße Achsbaugruppe mit einer Drehdurchführung für eine Reifendruckregelanlagen wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine Gesamtansicht eines ersten Ausführungsbeispiels der erfindungsgemäßen Achsbaugruppe mit einer Drehdurchführung für eine Reifendruckregelanlage in einem landwirtschaftlichen Traktor,
- Fig. 2: eine Detailansicht der in Fig. 1 wiedergegebenen Achsbaugruppe im Bereich der Drehdurchführung, und
- Fig. 3: eine Detailansicht eines gegenüber dem ersten Ausführungsbeispiel hinsichtlich der Ausgestaltung der Drehdurchführung abgewandelten zweiten Ausführungsbeispiels der erfindungsgemäßen Achsbaugruppe.

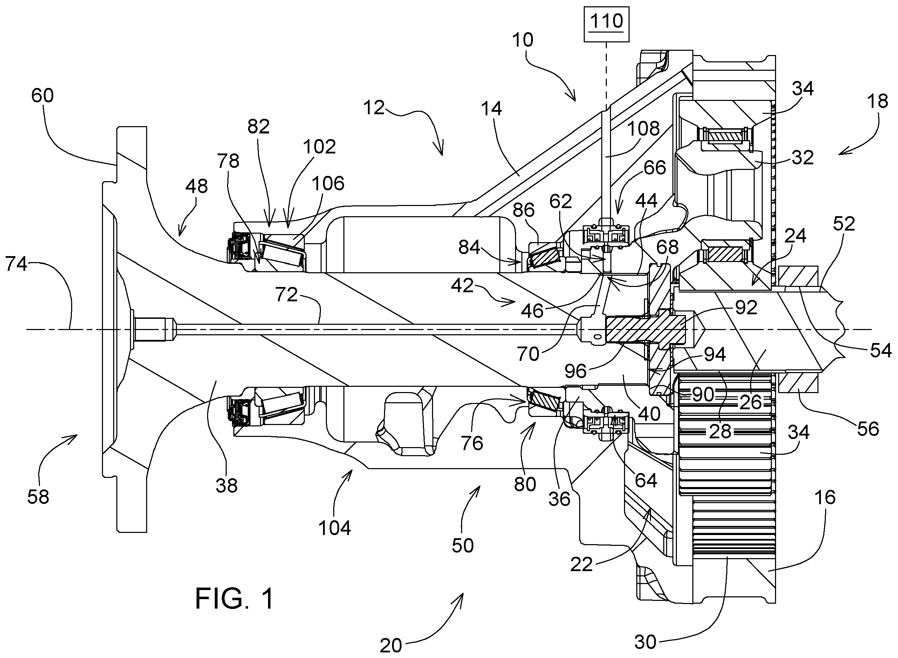

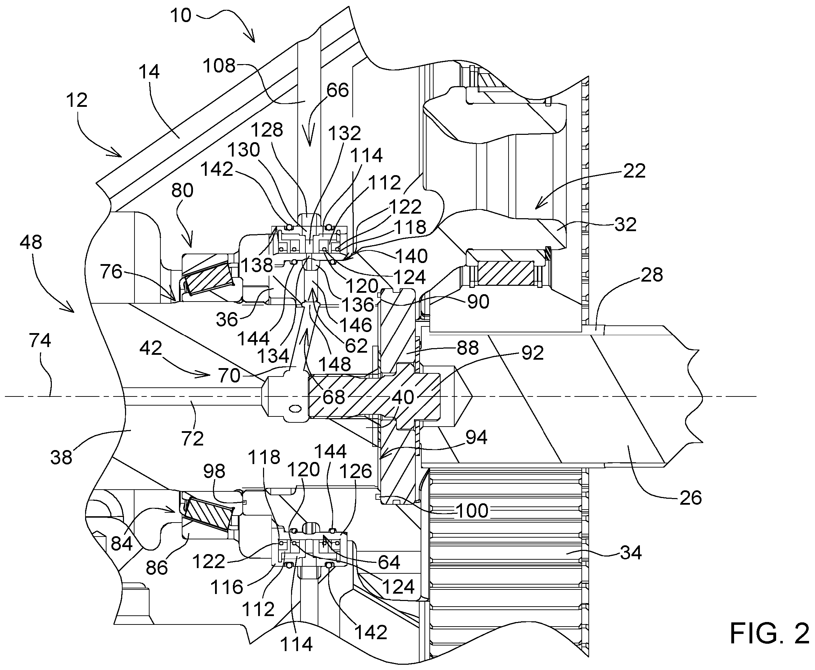

Fig. 1 zeigt eine im Schnitt dargestellte Gesamtansicht eines ersten Ausführungsbeispiels der erfindungsgemäßen Achsbaugruppe mit einer Drehdurchführung für eine Reifendruckregelanlage in einem (nicht näher wiedergegebenen) landwirtschaftlichen Traktor. Eine Detailansicht der erfindungsgemäßen Achsbaugruppe ist hierbei in Fig. 2 gezeigt.

Demgemäß umfasst die Achsbaugruppe 10 ein als Achstrichter 12 ausgebildetes Endantriebsgehäuse 14, das an einem angrenzenden Getriebegehäuse 16 eines Hinterachsdifferentials 18 des landwirtschaftlichen Traktors 20 angebracht ist. Innerhalb des Endantriebsgehäuses 14 befindet sich ein von der Achsbaugruppe 10 umfasstes Planetengetriebe 22, das eine Sonnenradwelle 24 in Gestalt einer von dem Hinterachsdifferential 18 antreibbaren Endantriebswelle 26 mit einem Sonnenrad 28, ein gegenüber dem Endantriebsgehäuse 14 feststehendes Hohlrad 30 sowie mehrere an einem Planetenradträger 32 drehbar gelagerte Planetenräder 34 aufweist, die sowohl mit dem Sonnenrad 28 wie auch dem Hohlrad 30 in Eingriff stehen. Der Planetenradträger 32 ist im Bereich eines daran ausgebildeten Axialflanschs 36 mit einer innerhalb des Endantriebsgehäuses 14 drehbar gelagerten Achswelle 38 antriebsverbunden. Hierzu ist ein Endabschnitt 40 der Achswelle 38 innerhalb einer durch den Axialflansch 36 umgrenzten Montageöffnung 42 drehfest aufgenommen, indem eine Außenverzahnung 44 am Endabschnitt 40 der Achswelle 38 durch Eingreifen in eine Innenverzahnung 46 in der Montageöffnung 42 des Axialflanschs 36 eine drehfeste Steckverzahnung ausbildet. Die Achswelle 38 stellt zugleich eine der beiden Hinterachsen 48 des landwirtschaftlichen Traktors 20 dar.

Die so gebildete Endantriebseinheit 48 dient der Erhöhung des Drehmoments der Achswelle 38 gegenüber der Endantriebswelle 26, abhängig von einem jeweils gewählten Untersetzungsverhältnis des Planetengetriebes 22. Die Endantriebswelle 26 steht dabei über eine Außenverzahnung 52 mit einer komplementären Innenverzahnung 54 einer Getriebeausgangswelle 56 des Hinterachsdifferentials 18 des landwirtschaftlichen Traktors 20 in Antriebsverbindung. Hierbei mündet die Achswelle 38 bzw. die durch diese gebildete Hinterachse 46 an ihrem freien äußeren Ende 58 in eine Radnabe 60, die zur Anbringung eines (nicht gezeigten) Hinterrads des landwirtschaftlichen Traktors 20 vorgesehen ist.

Innerhalb des Axialflanschs 36 ist ein Verbindungskanal 62 zur Herstellung einer Druckluftverbindung zwischen einer an einem Außenumfang 64 des Axialflanschs 36 verlaufenden Drehdurchführung 66 zur Druckluftzufuhr und einer am Endabschnitt 40 der Achswelle 38 vorgesehenen Lufteintrittsöffnung 68 ausgebildet. Die Lufteintrittsöffnung 68 bzw. eine diese bildende Durchgangsbohrung 70 mündet in einen innerhalb der Achswelle 38 verlaufenden Versorgungskanal 72 zum Anschluss an ein mit einem Reifeninnenraum des Hinterrads bzw. eines zugehörigen Hinterreifens kommunizierendes Reifendruckregelventil. Letzteres ist an einer Radfelge des Hinterrads angeordnet und dementsprechend nicht in Fig. 1 bzw. 2 abgebildet. Der Versorgungskanal 72 durchsetzt die Achswelle 38 zentral entlang ihrer Rotationsachse 74.

Beispielsgemäß ist in Fig. 1 und 2 der auf der linken Seite des Getriebegehäuses 16 angebrachte Achstrichter 12 dargestellt. Der auf der rechten Seite befindliche Achstrichter weist hierbei einen spiegelsymmetrischen Aufbau auf.

Um eine Beanspruchung der Achswelle 38 aufgrund betriebsbedingt über das Hinterrad einwirkender Biegebelastungen zu minimieren, ist diese innerhalb des Endantriebsgehäuses 14 im Bereich voneinander abgewandter Achsabschnitte 76, 78 mittels zugehöriger Lagerstellen 80, 82 drehbar abgestützt.

So ist einerseits eine erste bzw. innenliegende Lagerstelle 80 vorgesehen, bei der ein die Achswelle 38 gegenüber dem Endantriebsgehäuse 14 abstützendes Wälzlager 84 stirnseitig unmittelbar am Axialflansch 36 anliegt. Alternativ steht das Wälzlager 84 mit dem Axialflansch 36 über einen zwischenliegenden Toleranzausgleichsring in Kontakt. Bei dem Wälzlager handelt es sich beispielsweise um ein Kegelrollenlager. Bei dem Wälzlager 84 handelt es sich um ein Kegelrollenlager 86. Zum Verspannen des Planetenradträgers 32 bzw. des daran ausgebildeten Axialflanschs 36 gegenüber dem Kegelrollenlager 86 dient eine Andruckplatte 88, die entlang eines an der Innenseits des Axialflanschs 36 umlaufenden Absatzes 90 anliegt und deren Anpressdruck sich mittels eines Schraubbolzens 92 den jeweiligen Anforderungen entsprechend einstellen lässt. Zu diesem Zweck erstreckt sich der Schraubbolzen 92 durch die Andruckplatte 88 hindurch in ein an einer Stirnseite 94 der Achswelle 38 ausgebildetes Zentralgewinde 96. Der Schraubbolzen 92 bildet zugleich einen innenliegenden Abschluss des innerhalb der Achswelle 38 verlaufenden Versorgungskanals 72. Im Anlagebereich zwischen Axialflansch 36 und Wälzlager 84 bzw. Andruckplatte 88 vorgesehene Ringdichtungen 98, 100 dienen der Druckabdichtung nach außen (siehe Fig. 2).

Andererseits ist eine zweite bzw. außenliegende Lagerstelle 82 vorgesehen, bei der ein weiteres Wälzlager 102 die Achswelle 38 im Bereich eines äußeren Achstrichterendes 104 gegenüber dem Endantriebsgehäuse 14 abstützt. Auch das weitere Wälzlager 102 ist als Kegelrollenlager 106 ausgebildet.

Wie insbesondere in der Detailansicht der Achsbaugruppe 10 in Fig. 2 erkennbar ist, kommuniziert die Drehdurchführung 66 mit einem im Endantriebsgehäuse 14 ausgebildeten Luftzufuhrkanal 108 zum Anschluss an eine Reifendruckregelanlage 110, bestehend aus einer kompressorgespeisten Druckluftversorgung sowie einer zugehörigen Steuerung, die sich über eine im landwirtschaftlichen Traktor 20 befindliche Nutzerschnittstelle fahrerseitig bedienen lässt (nicht gezeigt). Beispielsgemäß umfasst die Drehdurchführung 66 paarweise angeordnete Radiallippendichtungen 112, 114, die an einer äußeren Ringhülse 116 fest angebracht sind und an ihren feien Enden in jeweilige Dichtlippen 118, 120 auslaufen, die mittels zugehöriger Wurmfedern 122, 124 gegen eine innere Ringhülse 126 gepresst werden, wobei letztere am Außenumfang 64 des Axialflanschs 36 verläuft.

Hierbei weist die innerhalb des umgebenden Endantriebsgehäuses 14 aufgenommene äußere Ringhülse 116 entlang ihres Umfangs eine über einen außenliegenden Ringkanal 128 mit dem Luftzufuhrkanal 108 kommunizierende Durchgangsöffnung 130 auf, die in einen zwischen den beiden Radiallippendichtungen 112, 114 verlaufenden Durchgangsbereich 132 übertritt, an den wiederum eine Vielzahl von entlang des Umfangs der inneren Ringhülse 126 ausgebildete Radialbohrungen 134 angrenzen. Diese münden ihrerseits in einen entlang des Außenumfangs 64 des Axialflanschs 36 ausgebildeten innenliegenden Ringkanal 136, in den schließlich der Verbindungskanal 62 einmündet. Die beiden Ringhülsen 116, 126 sind im Bereich eines äußeren bzw. inneren Passungssitzes 138, 140 im Endantriebsgehäuse 14 bzw. am Außenumfang 64 des Axialflanschs 36 aufgenommen. Darin verlaufende weitere Ringdichtungen 142, 144 dienen der Druckabdichtung nach außen.

Beispielsgemäß ist der Verbindungskanal 62 als innerhalb des Axialflanschs 36 radial verlaufende Durchgangsbohrung 146 ausgebildet. Die Durchgangsbohrung 146 wird im Rahmen einer Nachbearbeitung des als Gussteil hergestellten Planetenradträgers 32 eingebracht.

Wie weiterhin in Fig. 2 zu sehen ist, mündet der Verbindungskanal 62 in einen mit der Lufteintrittsöffnung 68 kommunizierenden weiteren Ringkanal 148, wobei der weitere Ringkanal 148 entlang eines Außenumfangs des Endabschnitts 40 der Achswelle 38 und/oder eines Innenumfangs der Montageöffnung 42 im Axialflansch 36 eingebracht ist. Der umlaufende weitere Ringkanal 148 stellt sicher, dass unabhängig von der Winkelposition, in der die drehfeste Steckverzahnung beim Einbau der Achswelle 38 hergestellt wird, stets eine durchgehende Druckluftverbindung zwischen Verbindungskanal 62 und Lufteintrittsöffnung 68 besteht. Dies vereinfacht die Montage der Achswelle 38 beim Zusammenbau der Endantriebseinheit 48 wesentlich.

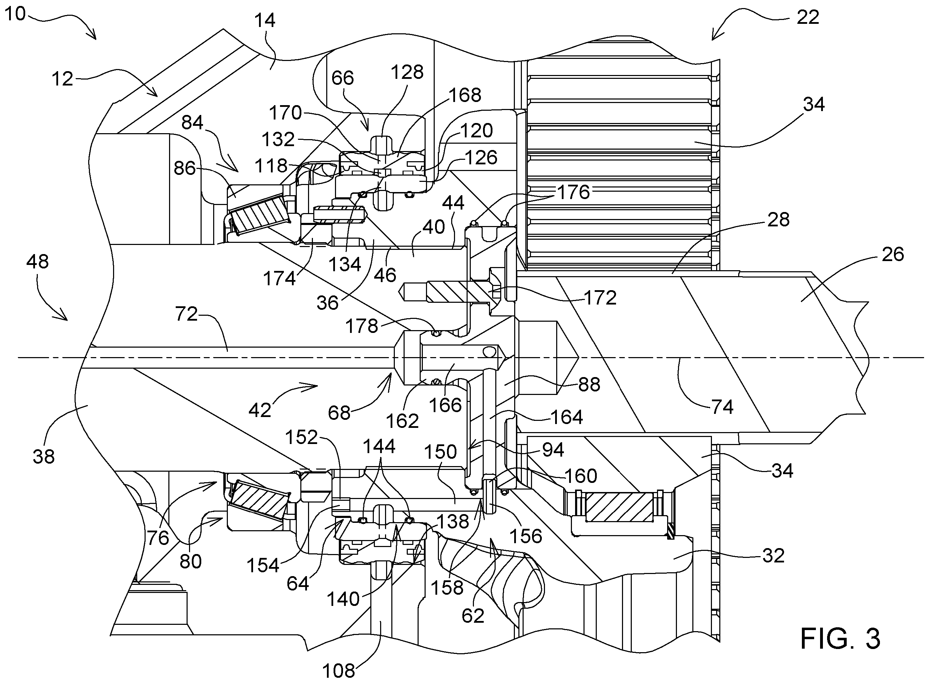

Fig. 3 zeigt eine Detailansicht eines gegenüber dem ersten Ausführungsbeispiel hinsichtlich der Ausgestaltung der Drehdurchführung 66 abgewandelten zweiten Ausführungsbeispiels der erfindungsgemäßen Achsbaugruppe.

Dieses unterscheidet sich unter anderem hinsichtlich des Verlaufs des Verbindungskanals 62 innerhalb des Axialflanschs 36, bei dem es sich entsprechend der in Richtung des Achswellenendes veränderten Lage der Lufteintrittsöffnung 68 gegenüber der Drehdurchführung 66 um eine zunächst in Richtung des Endabschnitts 40 der Achswelle 38 axial verlaufende Sackbohrung 150 handelt, deren außenliegende Öffnung 152 mittels eines Verschlusselements 154 abgedichtet ist. Die axial verlaufende Sackbohrung 150 geht in eine radial verlaufende Ausfräsung 156 über, die in einen entlang eines Außenumfangs 158 der Andruckplatte 88 vorgesehenen Ringkanal 160 eintritt, der wiederum über innerhalb der Andruckplatte 88 bzw. eines daran hervorspringenden Befestigungszapfens 162 ausgebildete Radial- bzw. Axialbohrungen 164, 166 mit dem innerhalb der Achswelle 38 verlaufenden Versorgungskanal 72 kommuniziert. Insofern stellen die Radial- bzw. Axialbohrungen 164, 166 eine in der Andruckplatte 88 ausgebildete Kanalverlängerung zur Herstellung einer Druckluftverbindung zwischen dem Verbindungskanal 62 und der in der Stirnseite 94 des Endabschnitts 40 der Achswelle 38 mittenzentriert eingebrachten Lufteintrittsöffnung 68 dar.

Auch hinsichtlich der Ausgestaltung der verwendeten Drehdurchführung 66 bestehen Abweichungen. Diese umfasst vorliegend eine einzelne Radiallippendichtung 168, an der die beiden Dichtlippen 118, 120 einstückig ausgeformt sind. Die Radiallippendichtung 168 ist hierbei innerhalb des umgebenden Endantriebsgehäuses 14 unmittelbar anliegend aufgenommen. Der außenliegende Ringkanal 128 steht über entlang des Umfangs der Radiallippendichtung 168 vorgesehene Öffnungen 170 mit dem Durchgangsbereich 132 in Verbindung.

Mehrere Schraubbolzen 172 dienen der Befestigung der vorliegend unmittelbar an der Stirnseite 94 der Achswelle 38 anliegenden Andruckplatte 88. Aus Darstellungsgründen ist in Fig. 3 lediglich ein einzelner Schraubbolzen 172 zu erkennen. Das der ersten bzw. innenliegenden Lagerstelle 80 zugeordnete Wälzlager 84 wird hier mittels einer Wellenmutter 174 vorgespannt. Entlang des Außenumfangs 158 der Andruckplatte 88 bzw. am Befestigungszapfen 162 verlaufende Ringdichtungen 176, 178 dienen hierbei der Druckabdichtung nach außen.

## Patentansprüche

1. Achsbaugruppe mit einer Drehdurchführung für eine Reifendruckregelanlage, insbesondere für einen landwirtschaftlichen Traktor, umfassend ein als Achstrichter (12) ausgebildetes Endantriebsgehäuse (14) mit einem Planetengetriebe (22), das eine von einem Hinterachsdifferential (18) antreibbare Endantriebswelle (26) mit einem Sonnenrad (28), ein gegenüber dem Endantriebsgehäuse (14) feststehendes Hohlrad (30) sowie mehrere an einem Planetenradträger (32) drehbar gelagerte Planetenräder (34) aufweist, die sowohl mit dem Sonnenrad (28) wie auch dem Hohlrad (30) in Eingriff stehen, wobei der Planetenradträger (32) im Bereich eines daran ausgebildeten Axialflanschs (36) mit einer innerhalb des Endantriebsgehäuses (14) drehbar gelagerten Achswelle (38) antriebsverbunden ist, wozu ein Endabschnitt (40) der Achswelle (38) innerhalb einer durch den Axialflansch (36) umgrenzten Montageöffnung (42) drehfest aufgenommen ist, **dadurch gekennzeichnet, dass** innerhalb des Axialflanschs (36) ein Verbindungskanal (62) zur Herstellung einer Druckluftverbindung zwischen einer an einem Außenumfang des Axialflanschs (36) verlaufenden Drehdurchführung (66) zur Druckluftzufuhr und einer am Endabschnitt (40) der Achswelle (38) vorgesehenen Lufteintrittsöffnung (68) ausgebildet ist, die insbesondere in einen innerhalb der Achswelle (38) verlaufenden Versorgungskanal (72) zum Anschluss an ein mit einem Reifeninnenraum eines zugehörigen Hinterrads kommunizierendes Reifendruckregelventil mündet.

2. Achsbaugruppe nach Anspruch **1, dadurch gekennzeichnet, dass** der Verbindungskanal (62) als innerhalb des Axialflanschs (36) radial und/oder axial verlaufende Bohrung ausgebildet ist.

3. Achsbaugruppe nach wenigstens einem der vorhergehenden Ansprüche, **dadurch gekennzeichnet, dass** eine Außenverzahnung (44) am Endabschnitt (40) der Achswelle (38) durch Eingreifen in eine Innenverzahnung (46) in der Montageöffnung (42) des Axialflanschs (36) eine drehfeste Steckverzahnung ausbildet.

4. Achsbaugruppe nach Anspruch 3, **dadurch gekennzeichnet, dass** der Verbindungskanal (62) in einen mit der Lufteintrittsöffnung (68) kommunizierenden Ringkanal (148) mündet, wobei der Ringkanal (148) entlang eines Außenumfangs des Endabschnitts (40) der Achswelle (38) und/oder eines Innenumfangs der Montageöffnung (42) im Axialflansch (36) eingebracht ist.

5. Achsbaugruppe nach wenigstens einem der vorhergehenden Ansprüche, **dadurch gekennzeichnet, dass** die Achswelle (38) innerhalb des Endantriebsgehäuses (14) im Bereich voneinander abgewandter Achsabschnitte (76, 78) mittels zugehöriger Lagerstellen (80, 82) drehbar abgestützt ist.

6. Achsbaugruppe nach Anspruch 5, **dadurch gekennzeichnet, dass** eine erste bzw. innenliegende Lagerstelle (80) vorgesehen ist, bei der ein die Achswelle (38) gegenüber dem Endantriebsgehäuse (14) abstützendes Wälzlager (84) stirnseitig unmittelbar am Axialflansch (36) anliegt oder mit diesem über einen zwischenliegenden Toleranzausgleichsring in Kontakt steht.

7. Achsbaugruppe nach Anspruch 6, **dadurch gekennzeichnet, dass** am Endabschnitt (40) der Achswelle (38) eine Andruckplatte (88) zum Verspannen des Planetenradträgers (32) bzw. des daran ausgebildeten Axialflanschs (36) gegenüber dem Wälzlager (84) vorgesehen ist, wobei eine in der Andruckplatte (88) ausgebildete Kanalverlängerung eine Druckluftverbindung zwischen dem Verbindungskanal (62) und der an der Stirnseite (94) des Endabschnitts (40) der Achswelle (38) mittenzentriert eingebrachten Lufteintrittsöffnung (68) herstellt.

8. Achsbaugruppe nach wenigstens einem der Ansprüche 5 bis 7, **dadurch gekennzeichnet, dass** eine zweite bzw. außenliegende Lagerstelle (82) vorgesehen ist, bei der ein weiteres Wälzlager (102) die Achswelle (38) im Bereich eines äußeren Achstrichterendes (104) gegenüber dem Endantriebsgehäuse (14) abstützt.

9. Achsbaugruppe nach wenigstens einem der vorhergehenden Ansprüche, **dadurch gekennzeichnet, dass** die Drehdurchführung (66) mit einem im Endantriebsgehäuse (14) ausgebildeten Luftzufuhrkanal (108) zum Anschluss an eine Reifendruckregelanlage (110) kommuniziert.
